(19) Europäisches Patentamt
European Patent Office
Office européen des brevets

(11) **EP 2 249 569 A1**

(12) **EUROPEAN PATENT APPLICATION**

(43) Date of publication:
**10.11.2010 Bulletin 2010/45**

(51) Int Cl.:
***H04N 7/26*** (2006.01)     ***H04W 52/30*** (2009.01)

(21) Application number: **10162227.2**

(22) Date of filing: **07.05.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(30) Priority: **08.05.2009 US 176865 P**<br><br>(71) Applicants:<br>• **IMEC**<br>  **3001 Leuven (BE)** | • **IBBT**<br>  **9050 Gent (BE)**<br><br>(72) Inventor: **Blanch Perez Del Notario, Carolina**<br>  **31180, Navarra (ES)**<br><br>(74) Representative: **Hertoghe, Kris Angèle Louisa et al**<br>  **DenK iP bvba**<br>  **Hundelgemsesteenweg 1114**<br>  **9820 Merelbeke (BE)** |

(54) **Cross-layer optimization for transmission of video codec over wireless networks**

(57)     A major limitation for wireless video communication on portable devices is the limited energy budget. In accordance with embodiments of the present invention, the energy cost of the two main energy consumers in such a wireless video device are minimized: the energy for video encoding and wireless communication tasks, via a cross-layer approach that explores the trade-off between coding and communication energies.

Mobile Pathloss70 TargetQuality 37.5

FIG. 10

## Description

### Field of the invention

The invention relates to the field of operating/executing applications on a portable device, in particular multimedia and telecom applications linked together.

### Background of the invention

Wireless video communication over portable devices has become the driving technology of many important applications such as personal communication, gaming and security. In this respect, both mobile communication protocols and video coding technologies have experienced rapid advances. A main challenge in wireless communications is the limited battery capacity of such portable devices. Hence, achieving low energy consumption becomes a critical issue.

On the one hand, in the context of video coding technologies, several video compression standards have been developed within the past years such as MPEG-4 Part 10, H.264/Advanced Video Codec (AVC) or the most recent Scalable Video Codec (SVC). The purpose of the H.264/AVC project was to create a standard capable of providing good video quality at substantially lower bit rates than previous standards (e.g. half or less the bit rate of MPEG-2, H. 263, or MPEG-4 Part 2), without increasing the complexity of design so much that it would be impractical or excessively expensive to implement. In a similar way, the Scalable Video Codec (SVC) has been developed as an extension of the H.264/AVC providing scalability aspects in the encoded video bitstream relying on a wide range of spatio-temporal and quality scalability. This higher flexibility comes also at the cost of an increased complexity or energy consumption.

In general, it can be seen that the trend in the evolution of video codecs aims at achieving higher compression degree and higher flexibility in terms of scalability and adaptability. Both features are highly valuable in mobile communications. First, bandwidth is a scarce resource and a high compression degree lowers the required bandwidth. Secondly, the variability of the available bandwidth together with the heterogeneity of devices and processing capabilities makes the bitstream scalability and adaptability a desired feature.

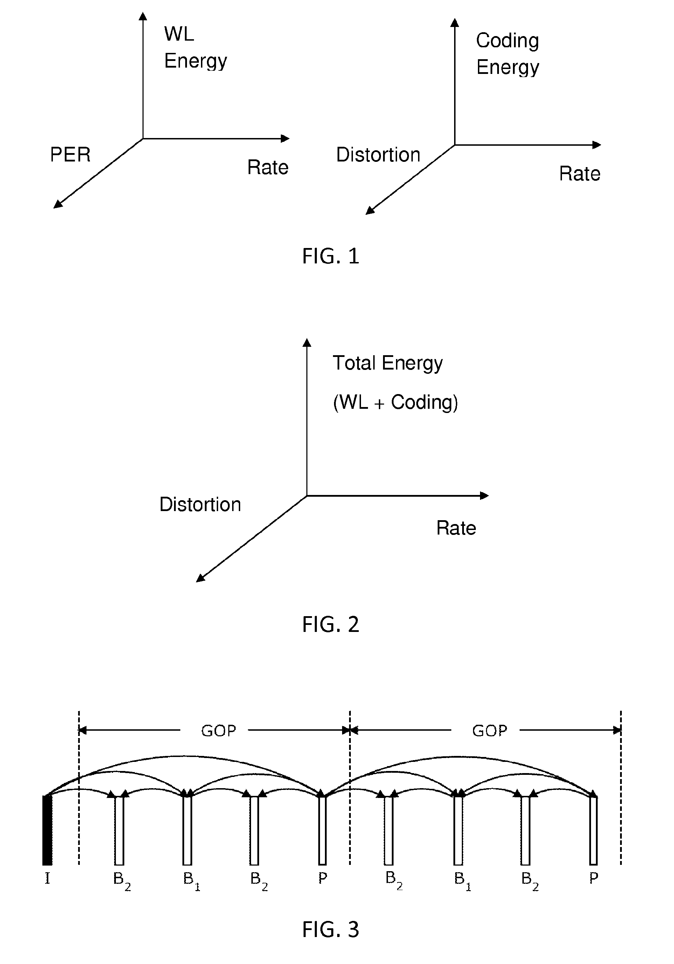

One obvious way to compress the video information is to reduce the target video quality. By allowing a coarser quantization the output rate is reduced at the cost of an increased video distortion. This exploits the inherent Rate - Distortion tradeoffs of video codecs. However, for a fixed target video quality, obtaining a higher compression degree generally requires the use of more complex coding tools, which increases the complexity of the coding process and with it its coding energy. This extends the Rate - Distortion tradeoff to a three-dimensional Rate - Distortion - Energy tradeoff, as shown in FIG. 1.

On top of this, to avoid severe degradation of the end video quality when transmission errors occur, the video codec should provide a certain degree of error resilience or robustness. This is achieved at the cost of an increased redundancy, or in other words, increased output rate, which is translated again in terms of Rate-Distortion tradeoff.

On the other hand, the trend in the development of new wireless communication standards is to provide, among other aspects, higher bandwidth/data rate to the end users. This way, the new WLAN standard, 802.11n, aims to provide up to 600 Mbits/s with respect to the 54 Mbits/s provided by previous WLAN standard such as 802.11g. Achieving high data rate is indeed one of the key aspects of wireless communications. The available bandwidth is variable as it is dependent on the channel conditions during transmission and the distance between mobile terminal and base station. Given the error-prone nature of wireless channels, providing a certain Quality of Service (QoS) to the end user is another challenging task. This QoS is generally measured in terms of latency and Packet Error Rate (PER) as this can have a dramatic impact on the end video quality. Finally, when addressing wireless communications from battery-powered devices, energy consumption becomes also a critical issue. The required energy consumption is directly linked to the amount of transmitted data: the more bits transmitted, the higher the energy consumption is. On top of this, the required transmission energy depends on both distance between transmitter and receiver and experienced channel conditions. This way, guaranteeing a specific QoS under higher transmission distance or worse channel conditions usually involves higher energy consumption. In general, the available tradeoffs in wireless communications can be summarized as Rate - PER - Energy tradeoffs. Most of the existing work focuses on capacity-energy trade-offs, by combining the wireless rate and PER dimensions into a general capacity dimension. For cross-layer coupling with video coding, it is however more practical to treat rate and PER separately. In Pollin et al., "MEERA: cross-layer methodology for energy efficient resource allocation in wireless networks", IEEE Transactions on Wireless Communications, 2007, 6(2): 617-628, a detailed wireless communication model is given relating total wireless communication energy (including transmission power and static power), rate and PER. It is shown that a relevant trade-off is achieved between wireless energy, rate and PER, in the sense that a higher rate or lower PER requirements correspond to a higher energy cost.

A main challenge in wireless communications is the limited battery capacity of the portable devices involved. Hence, achieving low energy consumption becomes a critical issue. To this end, most of the existing work focuses on minimizing the energy consumption of either the video codec or the wireless transmitter, which are considered the main energy consumers in the device. However, few authors consider the joint minimization of the codec and wireless energy by taking their interdependencies into account. In Katsaggelos et al., 2005, "Energy-Efficient Wireless Video Coding and Delivery", IEEE Wireless Communications, the impact of source coding on the wireless transmission energy is considered but the authors do not take into account the coding energy. In Gan et al, "Cross-Layer optimization for multi-user video streaming over IEEE 802.11e HCCA wireless networks", ICME 2008, a cross-layer optimization scheme is proposed to minimize coding and wireless energy for MPEG-4 video. In Mohapatra et al., 2007, "DYNAMO: A Cross-Layer Framework for End-to-End QoS and Energy Optimization in Mobile Handheld Devices", IEEE Journal on Selected areas in Communications, Vol.25, May 2007, several cross-layer adaptation techniques are proposed at application, OS, network and hardware level to reduce the energy of video streaming on mobile handheld systems. In He et al., Energy Minimization of Portable Video Communication Devices based on Power-Rate-Distortion Optimization", IEEE Transactions on Circuits and Systems for Video Technology, Vol.18, May 2008, the authors propose energy minimization based on power-rate-distortion optimization. The energy tradeoff between video encoding and wireless communication is analyzed and the MPEG-4 encoding process is adapted based on the video content variations. However, none of the mentioned works consider the user mobility and the impact of the path loss scenario.

## Summary of the invention

It is an object of embodiments of the present invention to provide a good method for run-time configuration of a codec, and a corresponding device.

The above objective is accomplished by a method and device according to the present invention.

Embodiments of the present invention relate to a cross-layer approach that focuses on the joint minimization of coding and wireless energy. To do so, the flexibility and power-rate-distortion tradeoffs of a codec, e.g. the Scalable Video Codec (SVC), may be exploited. As an example, by configuring the SVC codec settings in order to optimally trade-off coding and wireless energies, savings of up to 40% of the total energy consumption can be achieved without any video quality loss. If, according to further embodiments of the present invention, on top of this, the video target quality is adapted to the wireless energy scenario, savings of up to 50% on the total energy can be reached. In practice, both the joint cross-layer approach and the target quality control approach are implementable on any video codec that provides configurations with energy-rate tradeoffs. The SVC codec is particularly suitable as it provides a wider range in terms of energy-rate tradeoffs than other video codecs such as for example MPEG-4 or the AVC. Moreover, the cross-layer approach is based on the sensing of the wireless energy consumption and of low complexity. This makes it easily deployable and suitable for real-time implementations.

In a first aspect, the present invention provides a method for run-time configuration of at least one video codec. The method according to embodiments of the present invention comprises:

- determining total energy consumption of a video application taking into account wireless energy and coding energy for a plurality of configurations of said at least one video codec stored in a database in terms of energy and video rate tradeoffs for a pre-determined video quality; and
- selecting a particular video codec configuration based at least on said total energy consumption.

In an alternative method according to the first aspect of the present invention, the method may comprise:

- selecting in a database storing a plurality of configurations of the at least one video codec in terms of energy and video rate tradeoffs for each of at least one pre-determined video quality a target video quality as well as the corresponding plurality of configurations of the at least one video codec;
- determining total energy consumption of a video application taking into account wireless energy and coding energy for the selected plurality of configurations of said at least one video codec stored in the database; and
- selecting a particular video codec configuration based at least on said total energy consumption.
  In this latter case, also target video quality may be selected at run-time.

This way, in accordance with embodiments of the present invention, the energy cost of the two main energy consumers in a wireless video device are minimized: on the one hand the energy for video encoding and on the other hand the energy for wireless communication tasks. In accordance with embodiments of the present invention, a cross-layer approach is applied that explores the trade-off between coding and communication energies, the trade-offs for different configurations having been stored during design-time.

In a method according to embodiments of the present invention, selecting a particular video codec configuration at run-time, based at least on said total energy consumption may include selecting the video codec configuration with minimal total energy consumption.

In a method according to embodiments of the present invention, determining total energy consumption of a video application may comprise taking into account wireless energy based on a path loss value. Alternatively, in a method according to embodiments of the present invention, determining total energy consumption of a video application may comprise taking into account wireless energy based on average wireless energy per bit and video rate per codec configuration.

A method according to embodiments of the present invention may furthermore comprise, at design-time, building a database comprising a plurality of configurations of the at least one video coded in terms of energy and video rate tradeoffs for a pre-determined video quality.

In this case, a method for run-time configuration of at least one video codec may comprise

- at design-time:

  ○ building a database comprising a plurality of configurations of the at least one video codec in terms of energy and video rate tradeoffs for a pre-determined video quality; and

- at run-time:

  ○ estimating, for each of the plurality of codec configurations, its corresponding wireless energy;
  ○ determining total energy consumption of a video application taking into account wireless energy and coding energy for the plurality of configurations of said at least one video codec in the database; and
  ○ selecting a particular video codec configuration based at least on said total energy consumption.

In a method according to embodiments of the present invention, building a database comprising a plurality of configurations of the at least one video codec may comprise determining a plurality of sets of codec parameters. A set of codec parameters may include at least one parameter from the following list: GOP size, coding delay, medium granular scalability, rate distribution between enhancement layers, key picture enabled/disabled, spatial scalability. The more coding parameters are considered, the higher the obtained energy-rate tradeoffs may be. A good result is obtained when considering the first four parameters of the list and fixing the value of the last two. It is to be noted, however, that the use of extra coding parameters potentially increases the tradeoffs and energy savings of a technique according to embodiments of the present invention.

In a method according to embodiments of the present invention, building a database comprising a plurality of configurations of the at least one video codec may comprise building a database of Pareto optimal configurations. In particular embodiments, building a database comprising a plurality of configurations of the video codec may comprise storing not more than 6 configurations in the database. For example only configurations may be stored which differ at least a pre-determined amount in energy or rate.

A method according to embodiments of the present invention may be arranged for run-time configuration of a plurality of video codecs. In such a method, selecting a particular video codec configuration may furthermore take into account available transmission time for each of the plurality of video codecs. This may be applied when multi-user content is transmitted.

The available transmission time for the applications of each of the users may be determined by minimizing the total energy of all video codecs (centralized context). Alternatively, the available transmission time for the applications of each of the users may be determined by minimizing the total energy per video codec (distributed context).

In a second aspect, the present invention provides the use of a method according to any of the embodiments of the first aspect for a scalable video codec.

In a third aspect, the present invention provides a computer program product for executing any of the methods of the first aspect when executed on a computing device associated with a multimedia system. The computer program product provides the functionality of any of the methods according to the present invention when executed on a computing device associated with a multimedia system. Such computer program product can be tangibly embodied in a carrier medium carrying machine-readable code for execution by a programmable processor. The present invention thus relates to a carrier medium carrying a computer program product that, when executed on computing device associated with a multimedia system, provides instructions for executing any of the methods as described above. The term "carrier medium" refers to any medium that participates in providing instructions to a processor for execution. Such a medium may take many forms, including but not limited to, non-volatile media, and transmission media. Non volatile media include, for example, optical or magnetic disks, such as a storage device which is part of mass storage. Common forms of computer readable media include, a CD-ROM, a DVD, a flexible disk or floppy disk, a memory key, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

In a further aspect, the present invention provides a multimedia system comprising at least one video codec, the configuration of which is determined at run-time. The system according to embodiments of the present invention comprises:

- an energy determinator arranged for determining total energy consumption of a video application taking into account wireless energy and coding energy for a plurality of configurations of said at least one video codec stored in a database in terms of energy and video rate tradeoffs for a pre-determined video quality; and
- a selector arranged for selecting a particular video codec configuration based at least on said total energy consumption determined by the energy determinator.

A multimedia system according to embodiments of the present invention may comprise:

- means for, at design-time:

  ○ building a database comprising a plurality of configurations of the at least one video codec in terms of energy and video rate tradeoffs for a pre-determined video quality; and

- means for, at run-time:

  ○ determining total energy consumption of a video application taking into account wireless energy and coding energy for the plurality of configurations of said at least one video codec in the database; and for
  ○ selecting a particular video codec configuration based at least on said total energy consumption.

Alternatively, a multimedia system according to embodiments of the present invention may comprise at least one video codec wherein the configuration of the at least one video codec is determined at run-time, the system comprising:

- a first selector arranged for selecting in a database storing a plurality of configurations of the at least one video codec in terms of energy and video rate tradeoffs for each of at least one pre-determined video quality, a target video quality as well as the corresponding plurality of configurations of the at least one video codec;
- an energy determinator arranged for determining total energy consumption of a video application taking into account wireless energy and coding energy for the selected plurality of configurations of said at least one video codec in the database; and
- a second selector arranged for selecting a particular video codec configuration based at least on said total energy consumption determined by the energy determinator.

In this latter case, also target video quality may be selected at run-time.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

**Brief description of the drawings**

FIG. 1 illustrates tradeoffs at communication side and codec side, respectively.
FIG. 2 illustrates combined tradeoffs in a cross-layer approach.
FIG. 3 illustrates a high delay GOP structure.
FIG. 4 illustrates a low delay GOP structure.

FIG. 5 illustrates key picture prediction.
FIG. 6 illustrates Complexity- Rate tradeoffs for the Mobile & Calendar sequence.
FIG. 7 illustrates the Probability Density Function of channel attenuation.
FIG. 8 illustrates power-performance tradeoffs according to the path loss.
FIG. 9 illustrates the impact of path loss on energy breakdown.
FIG. 10 illustrates energy-rate trade-offs at 70 dB path loss.
FIG. 11 illustrates energy-rate trade-offs at 100 dB path loss.
FIG. 12 illustrates rate-distortion tradeoffs for the mobile sequence.
FIG. 13 illustrates wireless and coding energy consumption for the transmission of the Mobile sequence under different approaches.
FIG. 14 illustrates the Greedy algorithm to minimize global energy.
FIG. 15 illustrates the wireless and codec energy relation dependent on path loss and transmitted data.
FIG. 16 illustrates savings of stack-wide wireless cross-layer approaches according to embodiments of the present invention depending on underlying MAC protocol.
FIG. 17 illustrates an experimental set-up for stack-wide cross-layer optimized SVC streaming according to embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

## Detailed description of illustrative embodiments

To reduce the total energy consumption at a mobile terminal, in accordance with embodiments of the present invention an approach is proposed where not only communication energy is considered. Indeed, the two dominant power consumers at a mobile terminal are shown to be wireless transmission and video encoding processes. Therefore, in order to minimize the total energy consumption at the mobile terminal, in accordance with embodiments of the present invention, both energy components are addressed. For this purpose, the available tradeoffs at both video codec and network side as illustrated in FIG. 1 can be combined into one global tradeoff, as illustrated in FIG. 2, where the Total Energy at the device is the sum of coding and wireless energy which depends also on the rate or number of bits transmitted. In a similar way, the video distortion takes into account the impact of both coding and transmission distortion or PER. For simplicity, it can be assumed that a certain QoS is imposed at the network side guaranteeing a very low or marginal PER.

In order to analyze the global tradeoffs given in FIG. 2, in accordance with embodiments of the present invention, a cross-layer approach is proposed as the interdependencies and tradeoffs between different layers (such as coding and transmission) are considered.

The Scalable Video Codec (SVC) is an extension of the H.264/Advanced Video Codec (AVC) and it is the latest standardized video codec developed in the Joint Video Team (JVT), which is a collaboration between MPEG and ITU-T. The purpose of SVC is to provide scalability aspects in the encoded video bitstream in a way that a wide range of spatio-temporal and quality scalability can be achieved. SVC offers high flexibility; however, at an increased complexity and energy cost.

There are three axes of scalability provided in SVC:

- Temporal scalability enables the adaptation of the frame rate,
- Spatial scalability enables the adaptation of different resolutions,
- Quality scalability enables the adaptation of different qualities,

Combined scalability is any combination of the above.

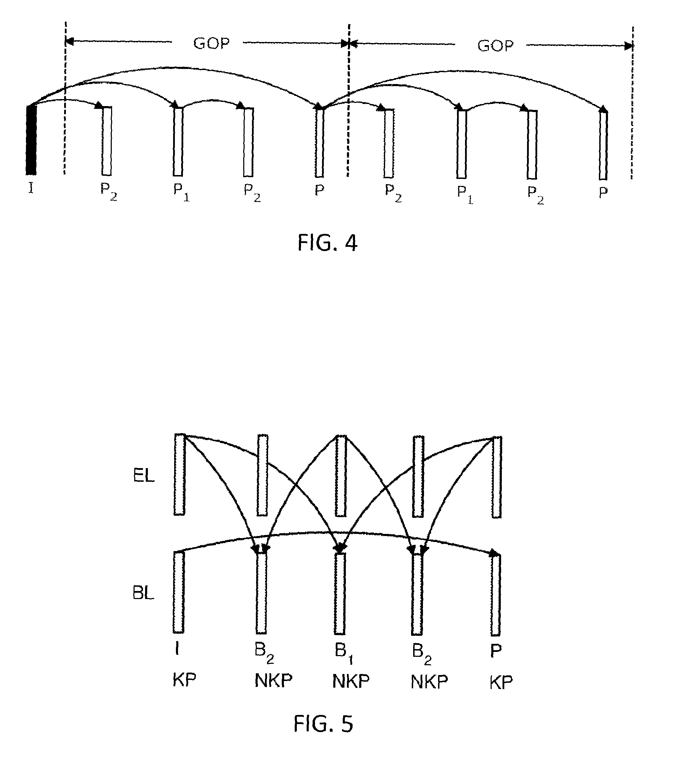

Temporal scalability is achieved by means of hierarchical prediction structures as illustrated in FIG. 3 and FIG. 4. The type of video frames are explained as follows. I frames are intra-predicted, and do not require any previously coded frame. P frames are uni-directional predicted from previous I frames or P frames. B frames are bi-directional predicted from previous I, P or B frames, in a hierarchical manner. A special type of I pictures, the first picture of a video sequence, is called an IDR picture (Instantaneous Decoder Refresh). At the occurrence of an IDR picture, following P and B pictures cannot be predicted from any picture preceding the IDR picture. This enables the refresh and flushing of the decoder. Both Intra and IDR pictures are coded periodically.

So-called key pictures are coded in regular intervals. A key picture and all pictures that are temporally located between a key picture and the previous key picture are considered to build a group of pictures (GOP).

A basic unit for hierarchical prediction structure is such Group of Pictures (GOP). The pictures at the boundaries of the GOP are either intra-coded or inter-coded by using previous GOP boundaries as reference for motion-compensated prediction. The remaining pictures of a GOP are hierarchically predicted, which inherently provides temporal scalability. This way, when this hierarchical structure is used to encode a sequence, the total number of temporal layers $L_{temporal}$ is given by:

$$L_{temporal} = \log_2 GOPSize + 1 \qquad (1)$$

Therefore, a prediction structure with a bigger GOP size provides a higher degree of temporal scalability as a higher number of temporal layers can be extracted from the encoded bit stream.

It is to be noted that it is possible to arbitrarily adjust the structural delay between encoding and decoding of a picture by restricting the prediction to motion-compensated prediction from pictures that follow the picture to be predicted in display order. This is illustrated in FIG. 4, where a hierarchical prediction structure is shown which does not employ motion-compensated prediction from pictures in the future. Although this structure provides the same degree of temporal scalability as the one of FIG. 3, its structural delay is equal to zero in contrast to 4 pictures for the prediction structure in FIG. 3. However, such a low-delay structure typically decreases coding efficiency.

For supporting spatial scalable coding, SVC follows the conventional approach of multilayer coding, where the spatial resolution can be changed by adding or dropping spatial enhancement layers. In each spatial layer, motion-compensated prediction and intra-prediction are employed as for single-layer coding. But in order to improve coding efficiency in comparison to simulcasting different spatial resolutions, the high resolution layers are predictive coded from low resolution layers using inter-layer prediction mechanisms. In particular, the pixels in lower resolution layer have to be up-sampled to match the resolution of higher layer.

With SNR (Signal-to-Noise-Ratio) scalability, also called quality scalability, the reconstructed video quality (often measured in mean square error, MSE or peak signal-to-noise ratio, PSNR) can be tuned by adding/dropping quality enhancement layers (EL). Therefore, when quality scalability is used, each video frame in the sequence consists of a base layer (BL) encoded at lower quality and one or more quality enhancement layers (EL) on top.

The latest SVC standard supports two types of quality scalability: coarse granular scalability (CGS) and medium granular scalability (MGS). Both of them employ the same inter-layer prediction technique as that in spatial scalability, except that there is no upsampling. The main difference between CGS and MGS lies in the capability of rate adaptation. Similar to spatial scalability, CGS layers can only be added/dropped at IDR pictures. In contrast, MGS layers can be added/dropped for each picture regardless of the picture type, hence providing much more flexibility than CGS.

An important concept in MGS is the key picture (KP), which aims at making a trade-off between error resilience and coding efficiency. More specifically, for a picture that is not a KP (i.e., non-KP or NKP), the EL of the reference pictures are employed for motion compensation. In contrast, for a KP, only the BL of the reference pictures are used for motion compensation. In practice, the KP concept can be efficiently combined with the GOP structure, where I and P pictures on the GOP boundaries are coded as KPs, and all the other pictures within a GOP are coded as NKPs (see FIG. 5). Each frame in the sequence consists of a base layer (BL) encoded at low quality and one quality enhancement layer (EL) on top.

In this way, if an EL of a picture is lost due either to packet loss or rate adaptation, the error propagation can be restricted within a GOP. In other words, the KPs are serving as resynchronization points. However, such error robustness comes at a cost of coding efficiency, as only the BL of reference pictures with coarse quality are used for motion-compensation of KPs.

Besides CGS and MGS there exists a third type of scalability called Fine Granular Scalability (FGS). FGS provides higher flexibility of adaptation than either CGS or MGS. However, this type of quality scalability is not included in the current profile definition of the SVC standard.

The rate of both Base Layer (BL) and Enhancement Quality Layer (EL) is highly dependent on the Quantization Parameter (QP) chosen to encode the specific layer, where a lower QP corresponds to a higher encoded quality and higher rate. This way, the control of the rate distribution between Base Layer and Enhancement Layer (EL) is done via the $\Delta QP$ parameter given as the difference between QP's of BL and EL:

$$\Delta QP = QP_{BL} - QP_{EL} \qquad (2)$$

The choice of $\Delta QP$ causes a specific rate distribution between BL and EL. This determines the percentage of discardable (EL) information in the bitstream and therefore its adaptation flexibility. The following section analyzes the impact of the chosen SVC codec configurations on the rate-distortion-complexity tradeoffs. For this purpose, the analysis is focused on configurations providing temporal and quality scalability. In terms of quality scalability, Medium Grain SNR scalability (MGS) will be used as this provides higher flexibility than CGS.

Rate - Distortion - Complexity Tradeoffs in SVC

The selection of the SVC codec configuration has a clear impact on the Rate-Distortion-Complexity tradeoffs. This way, the support of quality scalability usually incurs a loss in coding efficiency when compared to single-layer coding. On the contrary, the use of bigger GOP sizes, providing increased temporal scalability, generally increases the coding efficiency while incurring a higher coding complexity. Hereinbelow, these Rate-Distortion-Complexity tradeoffs provided by different SVC configurations are analyzed.

To perform the analysis the JSVM version 9.10 (JSVM, 2008) implementation of the SVC codec is used and its complexity is measured as number of cycles on a Pentium 4 PC. In terms of temporal scalability configurations are analyzed with GOP sizes ranging from 1 to 16, which correspond to using from 1 up to 5 temporal layers. Both prediction structures with high coding delay (FIG. 3) and low coding delay (see FIG. 4) are considered. Moreover, to guarantee a degree of error robustness configurations with one Base Layer and one MGS quality layer are considered. This is combined with a prioritization mechanism, where packets from the quality layer are dropped first in case of congestion. In addition, the Key Picture functionality is always enabled to avoid drift problems when an MGS layer of a frame is lost or dropped. Finally, to analyze different rate distributions between base layer (BL) and MGS layer, $\Delta QP$ parameter values of 2 and 6 are considered.

Table 1: Complexity- Rate tradeoffs per SVC codec configuration

| Point | GOP | QP_BL | ΔQP | Delay | Coding Complexity | Rate (Mbps) |
|-------|-----|-------|-----|-------|-------------------|-------------|
| 1 | 16 | 26 | 2 | High | 1.76 | 2.37 |
| 2 | 8 | 26 | 2 | High | 1.68 | 2.39 |
| 3 | 16 | 30 | 6 | High | 1.66 | 2.47 |
| 4 | 8 | 30 | 6 | High | 1.58 | 2.53 |
| 5 | 4 | 31 | 6 | High | 1.41 | 2.58 |
| 6 | 2 | 31 | 6 | High | 1.12 | 3.17 |
| 7 | 4 | 26 | 2 | Low | 0.658 | 3.29 |
| 8 | 16 | 30 | 6 | Low | 0.635 | 3.31 |
| 9 | 8 | 30 | 6 | Low | 0.63 | 3.32 |
| 10 | 4 | 30 | 6 | Low | 0.62 | 3.57 |
| 11 | 2 | 30 | 6 | Low | 0.59 | 3.99 |
| 12 | 1 | 32 | 6 | Low | 0.54 | 4.47 |

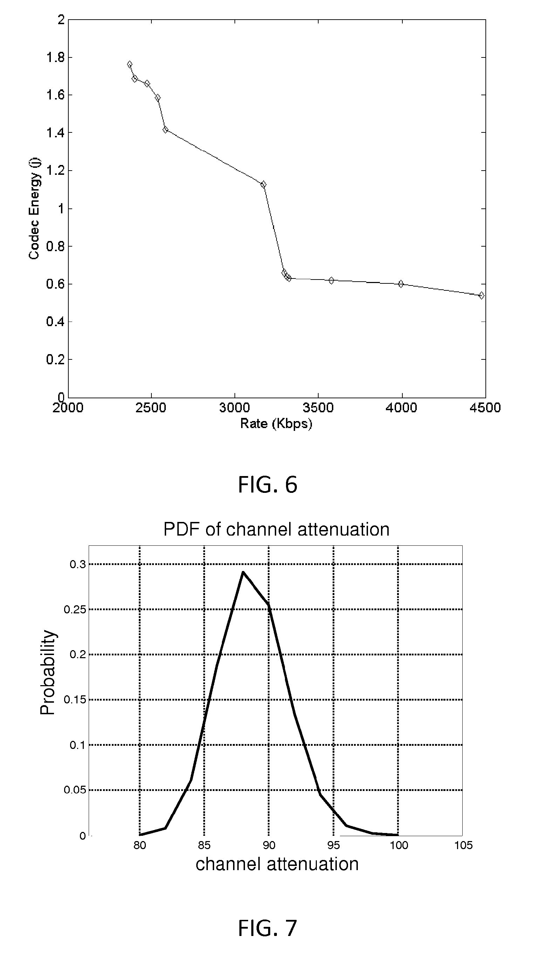

Table 1 shows the rate and coding complexity tradeoffs corresponding to encoding the well-known Mobile & Calendar MPEG test sequence with different SVC configurations. Each codec configuration is given by a combination of parameters such as GOP size, $\Delta QP$ and Delay structure that determine the bitstream spatio-temporal and quality scalability. The QP for each configuration is selected such that the resulted video quality is approximately 37.5 dB for all configurations (fixed video quality). The results are shown in Table 1 and FIG. 6. Codec configurations shown in Table 1 are ordered by coding complexity from the highest to the lowest. Only Pareto optimal configurations, in terms of normalized coding complexity versus output rate, are shown in Table 1. This is, all other possible configurations require higher coding complexity and rate and are therefore suboptimal.

FIG. 6 illustrates the complexity-rate tradeoffs given by the configurations in Table 1. All configurations shown are Pareto optimal in terms of normalized coding complexity versus output rate. It can be seen that higher bit rate corresponds to lower energy.

From the analysis of both FIG. 6 and Table 1 the following observations can be made:

- Achieving higher coding efficiency requires an increase of coding complexity.
- Configurations 1 to 6 form one cluster of points. These configurations have a high coding efficiency (low rate) and a high complexity, and use a High Delay structure (bi-directionally predicted frames).

- Configurations 7 to 12 form another cluster, with lower complexity and higher rates. They use the Low Delay structure (forward only prediction).
- Within each cluster of configurations, increased GOP sizes yield higher compression, in particular when low $\Delta QP$ are used.
- The configuration with the lowest compression efficiency and lowest coding energy corresponds to a GOP size of 1.

This analysis is repeated for other types of video content, providing similar conclusions in terms of Pareto optimal configurations. In general it is observed that the scalable video codec provides a wide range of tradeoffs in terms of rate and coding complexity. By selecting different codec configurations, for a fixed video quality, a range of factor 2 to 4 can be covered (depending on the video content) in terms of rate and a range of more than factor 3 in coding complexity.

It is to be noted that extending the set of SVC codec configurations to spatial scalability, enabled/disabled Key Picture functionality, use of Base Layer only without enhancement layers, distribution of frame QP within the GOP... etc. may further increase the available Complexity-Rate tradeoffs.

Codec Energy Modeling

The presented complexity measurements give an indication of the relative complexity cost between codec configurations. However, to compare the cost of video encoding and wireless transmission processes, it is necessary to map the coding complexity measurements onto energy consumption values. To do so, the SVC codec energy is estimated by taking as reference previous work on MPEG-4 (Gan et al, 2007, "Modelling Energy Consumption of an ASIC MPEG-4 Simple Profile Encoder", International Conference of Multimedia and Expo (ICME)) and the Advanced Video Codec (AVC) (Saponara et al, 2004, "Performance and Complexity Co-evaluation of the Advanced Video Coding Standard for Cost-Effective Multimedia Communications", EURASIP Journal).

Then the following assumptions are taken:

- Despite some restrictions (like constrained intra prediction), the Base Layer of an SVC stream is fully compliant with AVC, and hence it is assumed that its coding complexity is very similar.
- Then the complexity of the AVC codec can be related to the one of the MPEG-4 codec. By coding an AVC bit-stream with IPPP structure and disabling complex AVC tools similar rate-distortion characteristics are achieved as with MPEG-4 at very comparable coding complexity. This is the outcome of the analysis and observations performed in (Saponara & Blanch, 2003, "The JVT Advanced Video Coding Standard: Complexity and Performance Analysis on a Tool-by-tool Basis", Packet Video Conference, Nantes, France).

After combining the two above assumptions, the coding energy of the SVC Base Layer with a configuration of GOP 1 (IPPP structure) can be considered comparable to the coding energy of an MPEG-4 bitstream. Next, to estimate the coding energy for all other SVC configurations the relative complexity factors between configurations (given in Table 1) are applied.

It is to be noted, however, that the presented assumptions only aim at obtaining approximate values of the coding energy that can be compared with the wireless communication energy. The real coding energy depends on the specific implementation chosen and therefore may differ. However, it is out of the scope of this disclosure to obtain very accurate coding energy numbers. Its purpose is to obtain estimated values, which are sufficient to show the available tradeoffs and the added value of cross-layer optimizations. However, as will be shown later, the optimization approach remains valid under different codec energy assumptions arising from different codec implementations.

Wireless Energy Modeling in IEEE 802.11e

The efficient transmission of video over wireless local area networks (WLANs) is a challenging goal, especially when considering multiple mobile users on an error-prone channel and sharing the same channel resources. To address this challenge and provide Quality of Service the WLAN IEEE 802.11e standard (WLAN, 2004) proposes the Hybrid Coordination Function (HCF) with two different access schemes, namely HCF Controlled Channel Access (HCCA) and Enhanced Distributed Channel Access (EDCA). Both schemes support user mobility and provide high data rates but face the limitation of the high energy consumption. As wireless stations are battery-powered, achieving the required performance at minimal energy consumption becomes a critical issue.

The present analysis is focused on the HCCA functionality of the 802.11e standard. However, the cross-layer approach presented can be generalized and implemented on the distributed EDCA functionality or any other wireless standard such as cellular systems.

The decision on the allocation of the shared bandwidth to each of the users is taken at the AP (Access Point/ Base Station), where a cross-layer scheduler is located. This scheduler is located at the access point and relies on the HCCA functionality of the Hybrid Coordination Function in the IEEE 802.11e MAC protocol. The scheduler distributes the transmit opportunities to each mobile terminal.

At the wireless side two possible approaches are assumed:

- State-of-the-art approach (SoA): once the mobile terminal accesses the channel it transmits as fast as possible, with the lowest possible transmission opportunity (TXOP) as it chooses the transmission mode with the highest throughput available. After transmission the node switches to sleep mode.
- Wireless Cross-Layer approach (XL) as described in (Mangharam et al, 2005, "Optimal Fixed and Scalable Energy Management for Wireless Networks, INFOCOM, USA; and in Pollin et al, 2007, "MEERA: cross-layer methodology for energy efficient resource allocation in wireless networks", IEEE Transactions on Wireless Communications 6 (2):617-628): the wireless transmission configuration is tuned so as to tradeoff between sleeping and scaling. The TXOP is extended within the available time in order to reduce the energy consumption.

The objective of the scheduling in (Pollin et al, 2007) is to minimize the overall energy consumption of the total network while meeting the performance requirements. To do this, at design-time, the system behavior is characterized under a range of conditions (channel condition and resource demands). This information is stored as a database containing:

- The configuration containing values for the tunable parameters (knobs), specific to the environment;
- The cost, i.e. the energy;
- The resource, i.e. the time to transmit data of fixed size.

Based on the Cost (Transmission Energy) and Resource (Time) curves from each node, the scheduler can efficiently derive a near-optimal resource allocation at run-time using a greedy algorithm. To do this, it requires feedback on the state (channel condition and current demands) of each mobile node within the network. At the beginning of each frame period (scheduling period), the resource allocation algorithm is executed determining both the available transmission time (TXOP) and the configuration of the wireless parameters for each mobile user during that period. The scheduling decision is hence made every frame period; for delay sensitive traffic and high-quality video this is taken as 33 ms. For the details reference is made to prior work in (Mangharam et al, 2005), (Pollin et al, 2007).

The ns-2 network simulator (NS) is used to simulate the transmission of scalable video over the Hybrid Coordinated Function of the 802.11. To model the energy consumption the power and performance models from previous work in (Mangharam et al, 2005) are used. At the MAC and PHY layer the behavior of state-of-the-art wireless systems such as 802.11a devices is assumed where the highest feasible physical rate is always used and the power amplifier operates at the maximum transmit power. To consider the impact of sleep energy in the total wireless energy, it is assumed that the sleep state power corresponds to 26 mW (Timmers et al, "A distributed Multichannel MAC Protocol for Cognitive Radio Networks with Primary User Recognition", COWNCOM, 2007).

For the single user case we the state-of-the-art MAC protocol is used while for the multi-user case as well the MAC layer optimizations as described in (Pollin et al, 2007) are used.

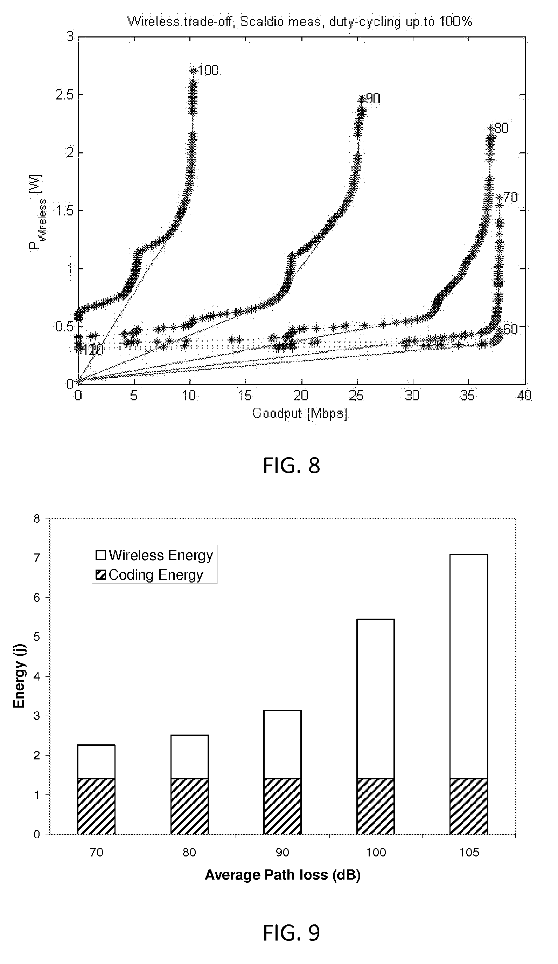

The channel conditions are modeled so that the effect of path loss attenuation and fast fading is combined. The Probability Density Function, shown in FIG. 7, is considered. This models the total channel attenuation: the fast fading and the average path loss value. The experiments consider average path loss values ranging from 70 to 105 dB as these will lead to different tradeoffs between coding and wireless energies. FIG. 8 shows typical power-performance tradeoffs for the average path loss values considered. Each graph in FIG. 8 illustrates that a higher bit rate corresponds to higher energy.

Stack-wide Cross-layer Optimization

The energy modeling and resulting energy-performance tradeoffs at both video codec and wireless side has been presented hereinabove. The tradeoff between wireless and coding energies is now introduced and the optimization cross-layer approach developed is presented. In addition, a method for optimal target video quality selection is proposed.

Coding Energy and Wireless Energy Tradeoffs

In the previous section the inherent compression-complexity tradeoffs in the video codec have been analyzed showing that achieving high compression (lower rates) requires configurations with higher encoding energy. In addition, the codec output rate, linked to the compression achieved, also has a clear impact on the required communication energy as the more bits transmitted, the higher the wireless energy consumption. This is illustrated as well in FIG. 8 where higher good-put requires increased wireless power consumption.

In addition to the rate, the channel attenuation (or path loss - related to distance between mobile terminal and access point) highly influences the wireless energy consumption. This means that a high path loss between transmitter and receiver requires higher communication energy to guarantee a successful reception. To illustrate this FIG. 9 shows the breakdown of the total energy in wireless and video coding when transmitting a video rate of 3 Mbps at an increasing average path loss. It is observed that for an average path loss below 90 dB the coding energy is dominant, while for path loss over 90 dB the wireless energy increases dramatically and dominates over the coding energy.

From the analysis performed in both FIG. 6 and FIG. 9, the following conclusions can be extracted:

- Communication energy and encoding energy follow opposite trends with respect to the video rate. In order to reduce the coding energy the compression efficiency can be reduced allowing higher output video rate energy. However, this increases the required communication energy. Similarly, by applying higher compression the bit rate is reduced and with it the communication energy, but the encoding energy increases. Hence, decreasing in this way the coding energy increases the communication energy and vice versa. This makes it necessary to trade-off both types of energy consumption.
- The video rate is the parameter that links coding energy and wireless energy and has a noticeable impact on both. This rate is controllable through the quantization parameter and the selected codec configuration.

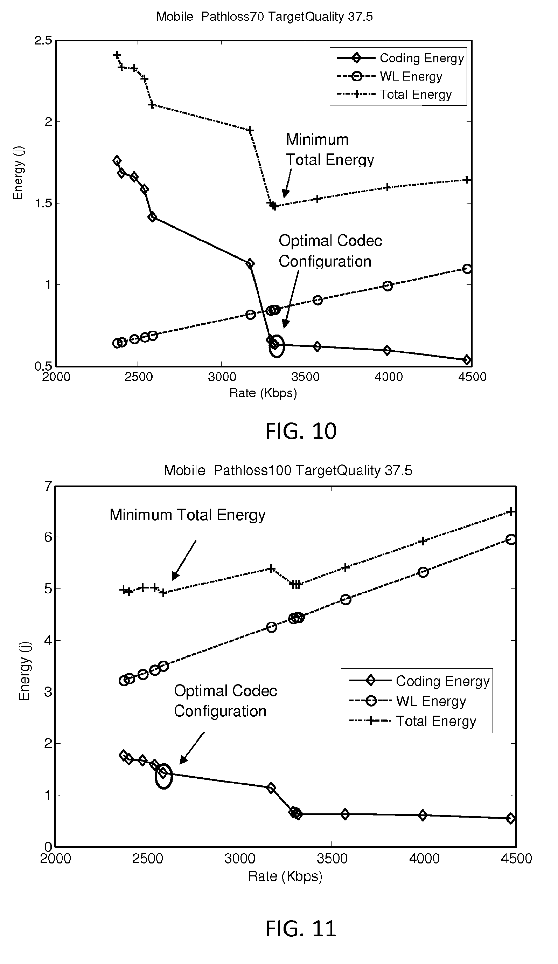

This is reflected in FIG. 10 and FIG. 11, which show the coding energy-rate tradeoffs of the SVC codec together with the associated wireless communication energy. Each point on the coding energy curve corresponds to a specific codec configuration (comprising particular codec parameters), which according to embodiments of the present invention is stored in a database. For the wireless energy consumption an average path loss of 70 dB is assumed in FIG. 10 and 100 dB in FIG. 11. The wireless energy consumption is determined at run-time. The global energy curve (sum of coding and wireless energy) is shown as well in FIG. 10 and FIG. 11.

The cross-layer approach according to embodiments of the present invention jointly considers the existing tradeoff between codec and wireless energy and selects the optimal SVC codec configuration that minimizes the total energy consumption. These configurations providing the lowest energy consumption are circled in FIG. 10 and FIG. 11. When the codec energy is dominant (see FIG. 10 at 70 dB path loss), the coding energy should be reduced by allowing lower compression ratio (higher rate). On the other hand, when the wireless energy is high and dominates over the codec energy (see FIG. 11 at path loss of 100 dB), to minimize the total energy it is imperative to reduce the wireless energy. To do so we need a high compression ratio at the codec side, regardless the coding energy increase, that reduces the video transmission rate.

It is to be noted that if an extended set of codec configurations is considered that further enlarges the complexity-rate tradeoffs (by either reducing the coding energy or the compressed rate) the total energy consumption can be further reduced.

As explained previously, the actual coding energy values will vary according to the specific codec implementation assumed. However, the presented optimization approach remains valid under any other coding-wireless energy tradeoff. When assuming that the coding energy in FIG. 10 is halved for a particular codec implementation while the relative complexity between codec configurations still holds. This would simply increase the relative contribution of wireless energy to the total energy and would move the optimal codec configuration to a lower rate configuration. In a similar way, if the coding energy was doubled with respect to FIG. 11, this would just lead to a different tradeoff where lowering the coding energy would be preferred. This way, the optimal codec configuration would move to the right in FIG. 11, corresponding to one of higher rate and lower complexity.

Practical implementation: sensing of average wireless energy

The channel attenuation (path loss) highly determines the existing tradeoff between wireless and coding energy and therefore the optimal codec configuration. However, other factors such as network load or underlying communication technology also influence the required wireless communication energy. Therefore, since an estimate of the wireless energy from the current path loss value does not consider the impact of such factors, it is better to track the required average wireless energy per bit. From this energy-per-bit value the wireless energy cost for transmitting different SVC configurations can be estimated, based on the known output rate for each configuration.

The selection of the optimal configuration is summarized as follows:

**Step 1:** At design-time databases of SVC Pareto optimal configurations in terms of energy-rate tradeoffs $\{E_{enc}(k_{enc}), R_{enc}(k_{enc})\}$ are built for the desired video quality $Q_{t\,arg\,et}$. These codec configurations are defined by the combination of the following codec parameters:

$$k_{enc} = \langle GOPsize, QP, \#ofMGSlayers, \Delta QP, CodingDelay, KP \rangle$$

**Step 2:** for each optimal codec setting $k_{enc}$, its corresponding wireless energy $E_{wl}(k_{enc})$ is estimated as:

$$E_{wl}(k_{enc}) = R(k_{enc}) * E_{measured} \qquad (3)$$

where $R(k_{enc})$ is the average rate generated by $k_{enc}$ and $E_{measured}$ is the measured wireless energy per bit. It is to be noted that it is not necessary to know the underlying tradeoffs and wireless configurations $k_{wl}$ at the MAC layer. The total energy is then obtained by:

$$E_{tot}(k_{enc}) = E_{wl}(k_{enc}) + E_{enc}(k_{enc}) \qquad (4)$$

**Step 3:** the SVC codec configuration that minimizes the total energy is selected:

$$k_{enc}^* = \arg \min_{\{k_{enc}\}} \left\{ E_{tot}(k_{enc}) : Q(k_{enc}) \geq Q_{target} \right\} \qquad (5)$$

It is to be noted that in order to track the wireless energy consumption in a specific device, a support from the driver of the wireless card is needed. In practice, it is sufficient to track the wireless energy consumption and total amount of bytes sent (to obtain the wireless energy per bit) every few hundreds of milliseconds. As low mobility is assumed, no significant changes in the average path loss can be expected within that time granularity.

Optimal Target Quality for Energy Minimization

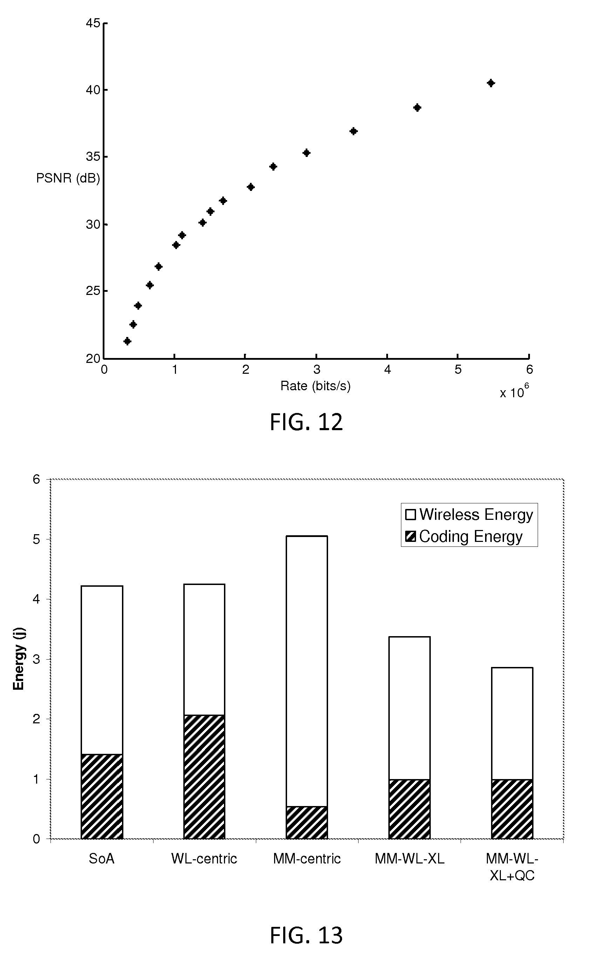

FIG. 9 illustrated how the wireless energy consumption rapidly increases with a higher path loss. When this happens, the wireless energy becomes the main component of the total energy. Hence, to minimize energy consumption the cross-layer controller in accordance with embodiments of the present invention chooses the SVC configuration with highest compression efficiency to minimize the rate and therefore the wireless energy. The only means to further reduce the rate, and with it the associated wireless energy, is to allow an increased video distortion. FIG. 12 shows the rate-distortion tradeoffs for the Mobile sequence at a fixed SVC configuration of high coding efficiency (GOP 16 with short delay). This way, at the highest compression efficiency the only way to reduce the rate is by targeting a lower PSNR.

The SVC rate-distortion tradeoffs are exploited to further reduce the total energy consumption. The basic idea behind this approach is that the video quality can be increased when the cost of the wireless energy per bit is low while it is decreased when the energy per bit becomes high. For this purpose an algorithm is implemented that maintains the average target video quality constant but trades off video quality with rate depending on the wireless scenario.

At design-time the optimal target quality selection may be computed as follows:

**Step 1:** N possible path loss scenarios $PL_i \in \{PL_1....PL_N\}$ are first identified, or in other words, scenarios of typical wireless energy consumption per transmitted bit. From the modeling performed in (Mangharam et al, 2005) typical values $E\_bit_i$ can then be extracted for i=1..N where N is the number of PL scenarios considered. From statistical analysis also a certain probability of occurrence can be assumed for each $PL_i$: $prob_i \in \{prob_1...prob_N\}$.

**Step 2:** The values for the desired average quality $\overline{Q}$, minimum required quality $Q_{min}$, and maximum quality $Q_{max}$ are determined. Then the set of possible target quality values can be defined as: $Q \in \{Q_{min}...Q_{max}\}$ where steps of 1 dB are chosen between consecutive Q values.

**Step 3:** Based on the set of possible Path loss PL and possible target quality Q, an optimal target quality $TQ_i$ may be assigned per Path loss scenario $PL_i$. An embodiment of an optimization algorithm may be summarized as follows:

*Initialize* $TQ_i = Q_{\max} \quad \forall i = 1..N$

*While* $\sum_{i=1}^{i=N} \dfrac{TQ_i}{N} \geq \overline{Q}$ *and* $TQ_i \geq Q_{\min} \quad \forall \; i \; = \; 1 \; .. \; N \quad Do$

*For j=1:N*

$TQ_{j\_}temp = TQ_j - 1dB$ /* Propose a change in target Quality */

*For i=1:N*

$TotE_i = CodingE_i + WLE_i \begin{cases} WLE_i = Ebit_i * Rate \\ \\ Extract \; CodingE_i \; corresponding \; to \; TQ_i \end{cases}$

$Global_j = (\sum_{i=1}^{i=N} (TotE_i * prob_i))$

*end*

*end*

/* Accept the change in target quality at that Path loss where energy reduction is highest */

$j^* = \arg\min(Global_j)$

$TQ_j = TQ_{j\_}temp$

*end*

It is to be noted that *CodingE_i* and Rate correspond to the optimal SVC configuration $k^*$ for the specific path loss *PL_j*.

The presented algorithm can be described as follows:

- The maximum target quality is initially assigned to each path loss scenario.
- Then the algorithm identifies at which path loss a quality reduction of 1dB leads to the highest reduction of total energy.
- This process is iterated while the desired average quality and minimum quality requirements are still met. As a result a set of {*TQ_i*, *PL_i*} is obtained $\forall i = 1..N$.

The target of the algorithm is to assign lower target qualities when the path loss and wireless energy consumption are high and higher target qualities when the path loss is low. This path loss is a function of the distance between mobile terminal and access point. In practice, statistics about the path loss occurrence probability can be gathered at runtime but for simplicity equal probability of occurrence for different average path loss is assumed.

A practical example of the application of the algorithm for optimal target quality selection described above is now shown. A set of possible Target Qualities is assumed {38.5, 37.5, 36.5, 35.5, 34.5, 33.5}, this is $Q_{\min}$ =33.5 dB, $Q_{\max}$ =38.5 dB. Moreover, at most 1 dB degradation of the average video quality is allowed, this is, $\overline{Q}$=36.5 dB. The path loss takes the values in the set {*PL_1* =70, 1 *PL_2* =80, *PL_3* =90, *PL_4* =100, *PL_5* =105} with identical probability of occurrence, this is, $\Pr ob_i = \dfrac{1}{N}$, where N = 5.

The output of the optimal target quality selection is {$TQ_1$ =38.5, $TQ_2$=38.5, $TQ_3$ =37.5, $TQ_4$ =35.5, $TQ_5$ =33.5} resulting in an average quality of $\overline{Q}$ =36.7 dB

It is to be noted that reducing the quality requirements to 33.5 dB during a path loss of 105 dB (i=5) does not have a very noticeable impact on the visually perceived quality, as the visual degradation is not due to packet errors occurring but only to a coarser quantization parameter.

At run-time, based on the measured wireless energy per bit consumption and the estimated consumption per path loss scenario $E\_bit_i$ it is possible to predict the current path loss scenario $PL_i$ and set the corresponding target quality $TQ_i$.

Once the new target quality is selected the optimal SVC codec configuration is recomputed. This is due to the fact that targeting a different video quality modifies the video rate range and with it the tradeoff between coding and wireless energy. Depending on this energy tradeoff a different codec configuration will be optimal for energy minimization.

Energy Savings

This section presents the results obtained from ns-2 simulations where a single mobile user transmits 150 frames of the high rate Calendar & Mobile sequence over a WLAN link targeting an average video quality of 37.5 dB. The wireless energy per bit is tracked and averaged every 6 video frames. At the codec side, changes on the codec configuration are allowed at IDR pictures, which are coded every 64 frames. As the video sequence is encoded at 30 frames per second, this is equivalent to a codec configuration every two seconds. Finally, a certain degree of user mobility is considered where the user is moving away from the Access Point at walking speed. To mimic the user's mobility, it is assumed that the average path loss experienced by the user changes every two seconds and takes the following values: 70, 80, 90, 100, and 105 dB. The results presented are averaged over the different path loss scenarios.

This section compares different transmission approaches: the first one being the state-of-the-art approach where no energy minimization is sought. Secondly, approaches that target the minimization of either wireless or multimedia energy consumption are considered. Finally, the joint multimedia-wireless cross-layer approach according to embodiments of the present invention is also shown, where joint minimization of multimedia and wireless energy is targeted by exploiting the interdependencies and tradeoffs between multimedia and wireless tasks.

This way, FIG. 13 shows the wireless and coding energy consumption for the transmission of the Mobile sequence under the mentioned approaches:

- State-of-the-art (SoA): no optimization seeking energy minimization is performed. A fixed SVC configuration (GOP = 4, 1 MGS layer, $\Delta QP$ = 6, KP, High Delay) with a reasonable compression-complexity tradeoff is selected, and this is fixed regardless of the transmission scenario.
- Wireless-centric optimization (WL): seeks to minimize the wireless energy. To this end, at the codec side the most coding efficient configuration is selected in order to reduce the rate and hence the wireless energy.
- Multimedia-centric optimization (MM): targets the reduction of the coding energy. This way, the codec configuration that minimizes the encoding energy is selected, regardless of its impact on the wireless energy.
- Stack-wide Multimedia-Wireless Cross-Layer (MM-WL-XL) according to embodiments of the present invention: aims at minimizing the sum of coding and wireless energy. To do so, according to the approach according to embodiments of the present invention, the SVC coding configuration that minimizes the total energy is selected.
- Stack-wide Multimedia-Wireless Cross-Layer with Quality Control (MM-WL-XL + QC) according to embodiments of the present invention: in addition to the previous approach, the target video quality is modified in order to further reduce the total energy consumption.

The corresponding savings on the total energy are shown in Table 2. Results for other video sequences such as Foreman and the slow motion Mother & Daughter are also given.

Table 2: Total energy savings per approach

|  | Sequence | MM-centric | WL-centric | MM-WL-XL | MM-WL-XL + QC |
|---|---|---|---|---|---|
| Saving (%) | Mobile | -19% | - 1% | 20% | 33% |
| Saving (%) | Foreman | -3.5% | -10% | 38% | 46% |
| Saving (%) | Mother | 3% | - 11% | 46% | 50.5% |

It can be seen from FIG. 13 and Table 2 that the approach that minimizes coding energy disregarding the impact on wireless energy (or vice versa), fails to minimize the total energy. This way, the MM-centric and WL-centric approaches provide at most minor savings or even result in energy increase. In contrast, the cross-layer approach according to embodiments of the present invention, which jointly considers the wireless and coding energy and their interdependencies, succeeds in minimizing the total energy. The savings range from 20% to 46% depending on the video content. On top of this, if the optimal target quality is selected based on the wireless consumption scenario an additional energy savings is achieved reaching savings from 33% to 50.5% on the total energy.

To conclude, Table 3 shows the SVC configurations that may be selected in the MM-WL-XL optimization according to embodiments of the present invention for the transmission of the Mobile sequence targeting an average of 37.5 dB for all path loss scenarios. Confirming the findings in previous section, at a low path loss (70 dB), a low complexity codec configuration is selected, while at 105 dB, a configuration with high coding efficiency is preferred. In addition, the target quality is adapted to the wireless energy consumption scenario, which is closely related to the path loss scenario.

Table 3: Optimal SVC configurations and Target quality for Mobile sequence

| Path Loss(dB) | GOP size | QP | $\Delta QP$ | Delay | Rate (Mbps) | Coding Energy (j) | Target Quality |
|---|---|---|---|---|---|---|---|
| 70 | 8 | 24 | 2 | Low | 3.95 | 0.69 | 38.5 dB |
| 80 | 8 | 24 | 2 | Low | 3.95 | 0.69 | 38.5 dB |
| 90 | 16 | 30 | 6 | Low | 3.31 | 0.63 | 37.5 dB |
| 100 | 4 | 30 | 2 | High | 1.65 | 1.43 | 35.5 dB |
| 105 | 16 | 36 | 2 | High | 1.51 | 1.00 | 33.5 dB |

Multi User Cross Layer Optimization

In further embodiments of the present invention, the cross-layer optimization presented hereinabove for a single user is extended to a multi-user scenario. In case of a centralized HCF function, the target for the central cross-layer manager is to minimize the global energy of the system, this is, the sum of all users' total energy, while satisfying their target video quality constraints $\overline{Q}(1 \leq i \leq N)$:

$$\min \sum_{i=1}^{i=N} E_{tot,i}\left(k_{enc,i}\right)$$

(6)

subject to

$$Q_i\left(k_{enc}\right) \geq \overline{Q}_i\left(1 \leq i \leq N\right)$$

(7)

and

$$\sum_{i=1}^{i=N} TXOP_i\left(k_{sys,i}\right) \leq S$$

(8)

where, $k_{sys,i} = \langle k_{enc.i}, k_{wl.i} \rangle$ is the configuration for the $i^{th}$ ($1 \leq i \leq N$) user; $E_{tot,i}$, $Q_i$ and $TXOP_i$ are the total energy consumption, video quality and required TXOP (based on $k_{sys,i}$), respectively, of the $i^{th}$ user, and S is the length of the scheduling period (taken, as an example only, as 33ms).

In multi-user cross-layer optimization according to embodiments of the present invention, the initial steps are identical to the single user case, namely:

**Step 1:** At design-time databases of SVC Pareto optimal configurations in terms of energy-rate tradeoffs $\{E_{enc}(k_{enc}),$ $R_{enc}(k_{enc})\}$ are built for the desired video quality $Q_{t\,arg\,et}$. These codec configurations are defined by the combination of the following codec parameters:

$$k_{enc} = \langle GOPsize, QP, \#ofMGSlayers, \Delta QP, CodingDelay, KP \rangle$$

**Step 2:** At run-time, based on the run-time measured wireless energy, for each optimal codec setting $k_{enc}$, its corresponding wireless energy $E_{wl}(k_{enc})$ is estimated as:

$$E_{wl}(k_{enc}) = R(k_{enc}) * E_{measured} \tag{9}$$

where $R(k_{enc})$ is the average rate generated by $k_{enc}$ and $E_{measured}$ is the measured wireless energy per bit. It is to be noted that it is not necessary to know the underlying tradeoffs and wireless configurations $k_{wl}$ at the MAC layer. The total energy is then obtained by:

$$E_{tot}(k_{enc}) = E_{wl}(k_{enc}) + E_{enc}(k_{enc}) \tag{10}$$

The remaining steps, specific to the multi-user optimization, are as follows:

**Step 3:** At run-time, the average required transmission time (TXOP value) per bit is also measured and passed from the MAC layer to upper layers. This way, the estimation of $TXOP(k_{enc})$, TXOP needed for each codec configuration, can be extracted as:

$$TXOP(k_{enc}) = R(k_{enc}) * TXOP_{measured} \tag{11}$$

This step results in a curve of $\{E_{tot}(k_{enc}), TXOP(k_{en})\}$ tradeoffs.

**Step 4:** based on the $TXOP$ - $E_{tot}$ curves of all users, the available bandwidth (seen here as transmission time) is allocated among users by the AP.

To do so, at run-time a greedy search algorithm may be used to determine the per-user resource allocation, $TXOP_i$, in order to minimize the total system energy, $E_{global} = \sum_{i=1}^{i=N} Etot_i$ while satisfying the timing constraints

$$\sum_{i=1}^{i=N} TXOP_i(k_{enc,i}) \leq S$$ . This algorithm is very similar to the one used in (Mangharam et al, 2005), with the main difference that the Wireless Energy is substituted by the Total Energy (Coding plus Wireless).
The steps in such Greedy Search algorithm are the following:

a) Allocate to each user "$i$" the TXOP corresponding to the codec configuration $k_{enc}*$ that minimizes the total energy of that particular user, $TXOP_i(k_{enc}*)$.
While the sum of all allocated TXOP per user exceeds the scheduling period, this is

$$\sum_{i=1}^{i=N} TXOP_i(k_{enc,i}) \geq S$$ do:

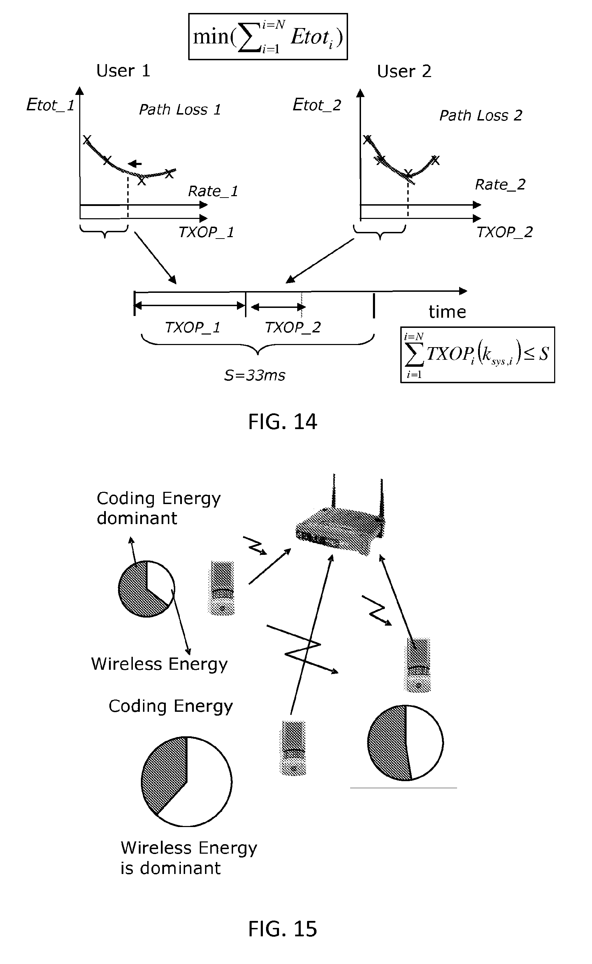

b) Identify the user "$i$" with the minimum slope, $Etot_i'(TXOP_i)$, representing the minimum increase in energy per resource (TXOP) unit decrease, (equivalent to moving towards smaller TXOP in the curves in FIG. 14). If there is more than one, choose one randomly. If the value of the maximum slope is 0, then stop. No further reduction of TXOP is possible in order to satisfy the constraints.

c) For the selected user "*i*" decrease $TXOP_i$ by going from the current codec configuration $k_{enc,i}(n)$ to a codec configuration $k_{en,i}(n-1)$ with a reduced $TXOP_i(k_{enc,i}(n-1)) < TXOP_i(k_{enc,i}(n))$.

If the sum of the time allocated for all users fits into the scheduling period $\sum_{i=1}^{i=N} TXOP_i(k_{enc,i}) \leq S$ stop the algorithm.

The resulting codec configurations $\{k_{enc,1}...k_{enc.N}\}$ per user with its corresponding transmission opportunity $\{TXOP_1(k_{enc,1}),...TXOP_N(k_{enc.N})\}$ results in the minimum system energy, $E_{global} = \sum_{i=1}^{i=N} Etot_i(k_{enc,i})$, while satisfying the bandwidth allocation constraints $\sum_{i=1}^{i=N} TXOP_i(k_{enc,i}) \leq S$.

FIG. 14 shows the TXOP allocation per user performed by the Greedy algorithm.

It is to be noted that the resulting $k_{enc}$ per user that minimizes the global energy (sum of total energy for all users) may not necessarily minimize the total energy of that specific user. In particular in a heavily loaded network, choosing the $k_{enc}$ *that* minimizes the total energy for each specific user may require a too high $TXOP(k_{enc})$ and cannot guarantee that the sum of all TXOP fits in the available scheduling period: $\sum_{i=1}^{i=N} TXOP_i(k_{enc,i}) \leq S$

This way, in order to fit the constraints, another $k_{enc}$ may be chosen such that the global system energy (sum of total energies per user) is minimized while satisfying the timing constraints.

FIG. 15 shows a multi-user scenario where mobile users can be located at different locations with respect to the AP. Depending on the user's distance from the AP it will experience lower or higher channel attenuation. This, together with its video content characteristics and target quality, will determine whether wireless or coding energy is dominant. Hence, coding energy is likely to be dominant in users closely located to the AP while wireless energy may be dominant in higher rate users far from the AP. To minimize the global energy the cross-layer controller will select, in accordance with embodiments of the present invention:

- For users close to the AP, where coding energy dominates: codec configurations with less compression efficiency but also lower coding energy to reduce the dominant coding energy.
- For users located further away from the AP, where wireless energy dominates: coding efficient configurations, which reduce the rate and with it the dominant wireless energy.

The multi-user cross-layer optimization according to embodiments of the present invention may be applied in a centralized system where the central cross-layer manager aims to minimize the global system energy.

In the case of a distributed network, such as the EDCA functionality, there is no centralized controller and therefore no global optimization is possible. Instead, each EDCA user would minimize its own total energy by applying the single user cross-layer optimization according to embodiments of the present invention and presented previously.

Results of Multi-user Optimization

This section shows the results achieved in the multi-user scenario according to embodiments of the present invention, where multiple users with different video content, possibly different target quality, and different average path loss attenuation (related to their location with respect to the AP) share network resources. Within the HCF function of a centralized network the cross-layer controller according to embodiments of the present invention may aim at minimizing the global network energy. This way, it will generally first decrease the energy consumption of those users that, due to their rate or path loss requirements, have a higher contribution to the global energy consumption.

Table 4: Multi-user scenario with high network load versus low network load

| | High network load | | | Low network load | | |
|---|---|---|---|---|---|---|
| | WL_E | Codec_E | Tot_E | WL_E | Codec_E | Tot_E |
| SoA MAC, fixed SVC config | 4.72 | 3.18 | **7.90** | 1.10 | 3.18 | **4.28** |
| WL-XL MAC, Fixed SVC config | 4.10 | 3.18 | **7.20 (9%)** | 0.58 | 3.18 | **3.76 (12%)** |
| WL-centric | 3.90 | 4.47 | **8.37 (-6%)** | 0.54 | 4.47 | **5.01 (-17%)** |
| MM-centric | 8.6 | 1.24 | **9.84 (-24%)** | 2.27 | 1.24 | **3.51 (18%)** |
| WL-MM-XL (WL-XL MAC) | 4.25 | 2.48 | **6.73 (15%)** | 0.63 | 1.43 | **2.06 (52%)** |

Table 4: 4 shows the energy consumption and gains for multi-user scenarios of different network loads, where different video contents (Mobile, Mother and Foreman) are transmitted in an HCF network with the same target quality of 37.5 dB. A fixed user's location is considered, this is, a fixed average Path loss per user:

- High network load (congested case): Mother at 80 dB, Foreman at 90 dB and Mobile at 105 dB
- Medium network load (without congestion): Mother and Mobile at 70 dB and Foreman at 80 dB

By comparing left and right columns in Table 4 it can be seen that, as in the single user case, the impact of the network load (partly due to the path loss value) influences the energy savings attained. In congested high load cases the energy savings are reduced (15 to 21% in this case) with respect to low network (over 50% saving). It can be noted that in this scenario the user with the Mobile sequence is the responsible for most of the network load, as it has the higher bandwidth demands and experiences the highest path loss (congested network case). This way, by locating one of the users, the 'Mobile sequence' user, closer to the AP (reducing its path loss from 105 to 70 dB) the energy values are reduced by factor 3 showing that this user is the main contributor to the global energy.

With respect to the different optimization approaches, as in the single user case, the highest energy savings are obtained for the joint WL-MM-XL approach.

It is to be noted that in the presented tables WL-XL MAC refers to the MAC layer optimizations of (Mangharam et al, 2005, "Optimal Fixed and Scalable Energy Management for Wireless Networks", INFOCOM, USA; and Pollin et al, 2007, "MEERA: cross-layer methodology for energy efficient resource allocation in wireless networks", IEEE Transactions on Wireless Communiccations 6(2):617-628), presented previously. The WL-MM-XL optimization according to embodiments of the present invention builds on top of this one but can be applied independently of the underlying MAC optimizations.

In a distributed context, such as the EDCA functionality, there is a cross-layer controller at each user's terminal selecting the terminal's codec configuration that minimizes the total energy configuration of that specific user. Therefore, no global optimization can be done. The cross-layer optimization at each user is done as presented for the single user optimization. Table 5 shows the energy gains for a multi-user scenario identical to the one of low-medium network load shown in Table 4: with the only difference that it is a distributed context (EDCA). By comparing the centralized approach in Table 4: and the distributed in Table 5 it can be seen that the wireless energy consumption is a bit higher in the EDCA case, due to idle energy in the system and lack of global optimization. As in the HCF case, the gains obtained by the joint WL-MM-XL optimization are the highest, being only slightly lower than those achieved in HCF context.

Table 5: Multi-user scenario in distributed context with low network load

| | Low network load | | |
|---|---|---|---|
| | WL_E | Codec_E | Tot_E |
| SoA MAC, fixed SVC config | 1.70 | 3.18 | **4.88** |
| WL-XL MAC, Fixed SVC config | 1.07 | 3.18 | **4.25 (13%)** |
| WL-centric | 0.96 | 4.47 | **5.49 (-12%)** |
| MM-centric | 2.26 | 1.24 | **3.50 (28%)** |
| WL-MM-XL | 1.31 | 1.24 | **2.56 (47%)** |

Multi-user and Quality Control for Optimal Target Quality Selection

The optimal target quality selection presented in accordance with embodiments of the present invention for the single user case is applied on each individual user in the multi-user scenario. The decision on the target quality selection is taken at each mobile user, based on its current wireless energy consumption and independently of other users' status.
Table 6 to Table 8 show the energy consumption for different Wireless Cross-Layer (XL) approaches in accordance with embodiments of the present invention. It can be seen that the MM-WL-XL with Quality Control (QC) in accordance with embodiments of the present invention increases the savings with respect to the SoA configuration up to 50%. This way, the MM-WL-XL +QC applies the optimal target quality described above depending on the path loss value. In Table 6 it can be seen how this degrades the average quality to 36.7 dB but yields much better savings than simply reducing the target quality to 36.5 dB for all path loss values.

Table 6: Energy consumption for different XL approaches on the Mobile sequence

|  | Coding E (j) | Wireless E(j) | Total E(j) | Quality |
|---|---|---|---|---|
| SoA | 1.41 | 2.81 | 4.22 | 37.5dB |
| WL-XL MAC | 1.41 | 1.96 | 3.37 (20%) | 37.5dB |
| MM-WL-XL(at 37.5dB) | 0.84 | 1.86 | 2.7 (36%) | 37.5dB |
| MM-WL-XL + QC | 0.76 | 1.31 | 2.07(51%) | 36.7dB |
| MM-WL-XL(at 36.5dB) | 0.81 | 1.62 | 2.43 (42%) | 36.5dB |

Table 7: Energy consumption for different XL approaches on the Foreman sequence

|  | Coding E (j) | Wireless E(j) | Total E(j) | Quality |
|---|---|---|---|---|
| SoA | 1.07 | 0.64 | 1.71 | 37.5dB |
| WL-XL MAC | 1.07 | 0.474 | 1.544 (10%) | 37.5dB |
| MM-WL-XL(at 37.5dB) | 0.499 | 0.4 | 0.9 (48%) | 37.5dB |
| MM-WL-XL+QC | 0.48 | 0.3 | 0.78(55%) | 36.7dB |
| MM-WL-XL(at 36.5dB) | 0.49 | 0.35 | 0.84 (51%) | 36.5dB |

Table 8 shows similar results in a multi-user scenario where the first user is the Foreman sequence transmitted for a path loss increasing from 70 to 105 dB, the second user is the Mobile sequence for a decreasing path loss from 105 to 70 dB, and the third user is the Foreman sequence at a fixed path loss of 80 dB.

Table 8: Energy consumption for different XL approaches on a multi-user scenario

|  | Coding E (j) | Wireless E(j) | Total E(j) | Quality |
|---|---|---|---|---|
| SoA | 3.57 | 3.44 | 7.01 | 37.5dB |
| WL-XL | 3.57 | 2.38 | 5.95 (15%) | 37.5dB |
| MM-WL-XL(at 37.5dB) | 1.84 | 2.26 | 4.10 (42%) | 37.5dB |
| MM-WL-XL + QC | 1.76 | 2.14 | 3.90 (45%) | 36.93dB |

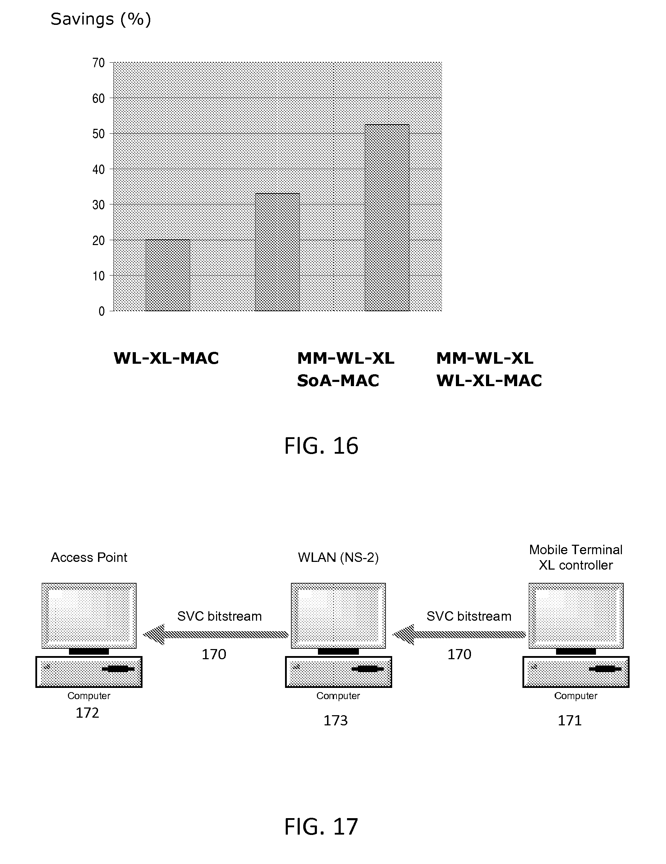

In a multi-user scenario the approach according to embodiments of the present invention for target quality selection can be easily implemented at each mobile terminal, where local optimization is applied and a different quality is targeted according to the path loss or wireless energy scenario. Any user applying this optimization locally will reduce its quality requirement and with it, its resource demand during a high path loss. This results in more resources available and benefits the rest of the users in the network. The user itself may also benefit from a reduced packet error rate when reducing its demand during these bad channel conditions. On the other hand, when the quality is increased at low path loss, the portion of the global resources demanded is very small and does not impact other users negatively.
It is to be noted that both the Multimedia-Wireless Cross-Layer (MM-WL-XL) approach according to embodiments of the present invention and the Quality Control (QC) approache according to embodiments of the present invention are independent of the underlying MAC protocol being SoA or with cross-layer optimizations (WL-XL). The only impact of an SoA MAC will be an increased wireless energy consumption observed at the cross-layer controller. FIG. 16 shows that the energy savings achieved by MM-WL-XL according to embodiments of the present invention on top of a SoA-MAC are above 30%. Naturally, combining the MM-WL-XL approach according to embodiments of the present invention with WL-XL optimizations at the MAC side provides the highest savings.

Experiment

In this experiment, of which the set-up is illustrated in FIG; 17, focus is laid on minimizing energy consumption of the two dominant energy consumers on mobile devices: video encoder and wireless transmitter. In particular, a single user scenario is addressed where the Scalable Video Coding (SVC) stream 170 is transmitted from a mobile device 171 to an Access Point (AP) 172 via WLAN uplink 173.

The goal, in accordance with embodiments of the present invention, is to minimize the total energy consumption while satisfying the Quality of Service (QoS) requirement of the end user. To this end, both SVC encoder and wireless transmitter are steered using a stack-wide cross layer (XL) optimization approach according to embodiments of the present invention.

The XL scheme in accordance with embodiments of the present invention takes full advantage of the flexibility offered by SVC and exploits the Power-Rate-Distortion tradeoffs given by different SVC configurations. An XL controller (not illustrated in FIG. 17) on the mobile terminal 171 is adapted for taking into account both video coding and wireless transmission energy consumption, and for minimizing the total energy consumption.

In particular, the XL controller according to embodiments of the present invention is designed in a hierarchical manner to facilitate implementation. On the application level, an MM-XL controller chooses the optimal SVC configuration. In accordance with embodiments of the present invention, a quality adaptation approach may be applied, which adapts the delivered video quality based on channel status, and satisfies both minimum and average quality requirements. In a scheme according to embodiments of the present invention, the channel status is tracked by using wireless transmission energy per bit (E/b), which makes the XL scheme according to embodiments of the present invention independent of the underlying wireless communication protocol.

The wireless energy per bit may be tracked per frame and averaged every few frames. As low mobility is considered (users only changing place with respect to the base point only at walking speed), changes in the path loss (and therefore on the wireless energy) occur at a relatively low pace of at least 2 seconds. The wireless energy needs to be tracked at a lower time granularity to detect these path loss changes. It is chosen to average the wireless energy every 6 frames, at 30 frames per second this is equivalent to 200 ms, which is sufficient granularity.

At the codec side, changes of codec configuration are only allowed at IDR frames. On the one hand, the lower the period between IDR, the faster the speed at which we can adapt the codec configuration to the network conditions. On the other hand, the higher the frequency of IDR frames the higher the video rate overhead is. The minimum IDR period can be of 16 frames (as this is the maximum GOP size possible), this allows codec configuration changes every half a second (16*33ms). We consider the case of slow mobility where changes of codec configuration at every 2 seconds are sufficient. This allows us to choose encoding IDR at a period of 64 frames (equivalent to 2 seconds), a sufficiently low IDR period to have a negligible impact on the rate.

Finally, a certain degree of user mobility is considered where the user is moving away from the Access Point 172 at walking speed. To mimic the user's mobility, the average path loss experienced by the user changes and during the 10 seconds of simulation time it gradually evolves from 70 to 105 dB.

Moreover, in practice the database of possible codec configurations can be pruned to a lower set of points. The pruning of the database may be performed by selecting points which differ among them in at least a pre-determined amount, e.g. 10%, in codec energy or rate. This guarantees that changes among the selected configurations have a noticeable impact on the wireless and coding energy. In the present experiment, this resulted in a set of 6 possible configurations out of the original 12 Pareto optimal configurations. The impact on the resulting energy savings was, however, marginal.

On the other hand, on the MAC and PHY level, a WL-XL controller optimizes the wireless transmitter by tuning the power amplifier, modulation and coding rate, etc.

The simulation setup is illustrated in FIG. 17. The mobile terminal 171, Access Point (AP) 172 and WLAN 173 are simulated on three Linux PCs. An SVC bitstream 170 is transmitted from the mobile terminal 171 to the AP 172 via WLAN uplink 172. The stack-wide XL controller in accordance with embodiments of the present invention on the mobile terminal 171 optimizes the SVC encoder configuration and wireless transmitter configuration. The WLAN is simulated using NS-2 for a single user scenario.

The simulation can be run in two modes:

1. State-of-the-art mode, where no cross-layer optimization in accordance with embodiments of the present invention is performed.
2. Stack-wide XL optimization in accordance with embodiments of the present invention is enabled.

Experimental results show that the XL scheme in accordance with embodiments of the present invention is able to save up to 60% of the total energy when compared to the state-of-the-art system.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

**Claims**

1. A method for run-time configuration of at least one video codec, the method comprising
   ○ determining total energy consumption of a video application taking into account wireless energy and coding energy for a plurality of configurations of said at least one video codec stored in a database in terms of energy and video rate tradeoffs for a pre-determined video quality; and
   ○ selecting a particular video codec configuration based at least on said total energy consumption.

2. A method according to claim 1, wherein selecting a particular video codec configuration based at least on said total energy consumption includes selecting the video codec configuration with minimal total energy consumption.

3. A method according to any of the previous claims, wherein determining total energy consumption of a video application comprises taking into account wireless energy based on a path loss value.

4. A method according to any of claims 1 to 2, wherein determining total energy consumption of a video application comprises taking into account wireless energy based on average wireless energy per bit and video rate per codec configuration.

5. A method according to any of the previous claims, furthermore comprising, at design-time, building a database comprising a plurality of configurations of the at least one video coded in terms of energy and video rate tradeoffs for a pre-determined video quality.

6. A method according to claim 5, wherein building a database comprising a plurality of configurations of the at least one video codec comprises determining a plurality of sets of codec parameters.

7. A method according to claim 6, wherein a set of codec parameters includes at least one parameter from GOP size, coding delay, medium granular scalability, rate distribution between enhancement layers, key picture enabled/disabled, spatial scalability.

8. A method according to any of claims 5 to 7, wherein building a database comprising a plurality of configurations of the at least one video codec comprises building a database of Pareto optimal configurations.

9. A method according to any of claims 5 to 8, wherein building a database comprising a plurality of configurations of the video codec comprises storing not more than 6 configurations in the database.

10. A method according to any of the previous claims for run-time configuration of a plurality of video codecs, wherein selecting a particular video codec configuration furthermore takes into account available transmission time for each of the plurality of video codecs.

11. A method according to claim 10, wherein the available transmission time is determined by minimizing the total energy of all video codecs or by minimizing the total energy per video codec.

12. Use of a method according to any of claims 1 to 11 for a scalable video codec.

13. A computer program product for executing any of the methods as claimed in claims 1 to 12 when executed on a computing device associated with a multimedia system.

14. A machine readable data storage storing the computer program product of claim 13.

15. A multimedia system comprising at least one video codec wherein the configuration of the at least one video codec is determined at run-time, the system comprising:

○ an energy determinator arranged for determining total energy consumption of a video application taking into account wireless energy and coding energy for a plurality of configurations of said at least one video codec stored in a database in terms of energy and video rate tradeoffs for a pre-determined video quality; and
○ a selector arranged for selecting a particular video codec configuration based at least on said total energy consumption determined by the energy determinator.

FIG. 1

FIG. 2

FIG. 3

FIG. 4

FIG. 5

## FIG. 6

## FIG. 7

FIG. 8

FIG. 9

Mobile  Pathloss70 TargetQuality 37.5

FIG. 10

Mobile  Pathloss100 TargetQuality 37.5

FIG. 11

FIG. 12

FIG. 13

$$\boxed{\min(\sum_{i=1}^{i=N} Etot_i)}$$

**User 1**

Etot_1

*Path Loss 1*

*Rate_1*

*TXOP_1*

**User 2**

Etot_2

*Path Loss 2*

*Rate_2*

*TXOP_2*

*TXOP_1*   *TXOP_2*

time

$$\boxed{\sum_{i=1}^{i=N} TXOP_i\left(k_{sys,i}\right) \le S}$$

*S=33ms*

## FIG. 14

Coding Energy dominant

Wireless Energy

Coding Energy

Wireless Energy is dominant

## FIG. 15

Savings (%)

|          |              |           |
|----------|--------------|-----------|
| **WL-XL-MAC** | **MM-WL-XL** | **MM-WL-XL** |
|          | **SoA-MAC**  | **WL-XL-MAC** |

FIG. 16

Access Point

WLAN (NS-2)

Mobile Terminal
XL controller

SVC bitstream

SVC bitstream

170

170

Computer

Computer

Computer

172

173

171

FIG. 17

**EUROPEAN SEARCH REPORT**

Europäisches Patentamt
European Patent Office
Office européen des brevets

Application Number

EP 10 16 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | BLANCH C ET AL:  "Cross-layer optimization for the Scalable Video Codec over WLAN" PACKET VIDEO WORKSHOP, 2009. PV 2009. 17TH INTERNATIONAL, IEEE, PISCATAWAY, NJ, USA, 11 May 2009 (2009-05-11), pages 1-6, XP031483157 ISBN: 978-1-4244-4651-3 * the whole document * ----- | 1-15 | INV. H04N7/26 H04W52/30 |
| X | TSE-HUA LAN ET AL:  "Power optimized mode selection for H.263 video coding and wireless communications" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US LNKD- DOI:10.1109/ICIP.1998.723328, vol. 2, 4 October 1998 (1998-10-04), pages 113-117, XP010308578 ISBN: 978-0-8186-8821-8 | 1-6,8,9, 13-15 | |
| Y | * the whole document * ----- | 7,10-12 | TECHNICAL FIELDS SEARCHED (IPC) |
| X | TSE-HUA LAN ET AL:  "Adaptive low power multimedia wireless communications" MULTIMEDIA SIGNAL PROCESSING, 1997., IEEE FIRST WORKSHOP ON PRINCETON, NJ, USA 23-25 JUNE 1997, NEW YORK, NY, USA,IEEE, US LNKD- DOI:10.1109/MMSP.1997.602664, 23 June 1997 (1997-06-23), pages 377-382, XP010233852 ISBN: 978-0-7803-3780-0 * the whole document * ----- | 1,2, 13-15 | H04N H04W |

-/--

The present search report has been drawn up for all claims

| Place of search | Date of completion of the search | Examiner |
|---|---|---|
| Berlin | 29 July 2010 | Santos Luque, Rocio |

EPO FORM 1503 03.82 (P04C01)

Europäisches
Patentamt

European
Patent Office

Office européen
des brevets

# EUROPEAN SEARCH REPORT

Application Number

EP 10 16 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | TONG GAN ET AL: "Cross-layer optimization for multi-user video streaming over IEEE 802.11E HCCA wireless networks" MULTIMEDIA AND EXPO, 2008 IEEE INTERNATIONAL CONFERENCE ON, IEEE, PISCATAWAY, NJ, USA, 23 June 2008 (2008-06-23), pages 505-508, XP031312769 ISBN: 978-1-4244-2570-9 * the whole document * ----- | 10,11 | |
| Y | QIAN ZHANG ET AL: "A power-optimized joint source channel coding for scalable video streaming over wireless channel" ISCAS 2001. THE 2001 IEEE INTERNATIONAL SYMPOSIUM ON CIRCUITS AND SYSTEMS (CAT. NO.01CH37196) IEEE PISCATAWAY, NJ, USA; [IEEE INTERNATIONAL SYMPOSIUM ON CIRCUITS AND SYSTEMS],, vol. 5, 6 May 2001 (2001-05-06), pages 137-140, XP010542051 ISBN: 978-0-7803-6685-5 * page 137, right-hand column, lines 10-15 * * page 138, left-hand column, last line * * page 139, right-hand column, line 1 - line 26 * ----- -/-- | 7,12 | |

TECHNICAL FIELDS
SEARCHED    (IPC)

The present search report has been drawn up for all claims

| Place of search | Date of completion of the search | Examiner |
|---|---|---|
| Berlin | 29 July 2010 | Santos Luque, Rocio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**Europäisches Patentamt**
**European Patent Office**
**Office européen des brevets**

# EUROPEAN SEARCH REPORT

Application Number

EP 10 16 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HE ET AL: "Energy Minimization of Portable Video Communication Devices Based on Power-Rate-Distortion Optimization" IEEE TRANSACTIONS ON CIRCUITS AND SYSTEMS FOR VIDEO TECHNOLOGY, IEEE SERVICE CENTER, PISCATAWAY, NJ, US, vol. 18, no. 5, 1 May 2008 (2008-05-01), pages 596-608, XP011204447 ISSN: 1051-8215 * abstract * * section II, from page 2 to page 3 * * page 5 * * section V, from page 7 to page 8 * ----- | 1-15 | |
| A | US 2003/064744 A1 (ZHANG ET AL) 3 April 2003 (2003-04-03) * abstract * * paragraphs [0022], [0 31] - [0032], [0 42] - [0063] * ----- | 1-15 | |
| A | XIAOAN LU ET AL: "Power efficient H.263 video transmission over wireless channels" INTERNATIONAL CONFERENCE ON IMAGE PROCESSING (ICIP),, vol. 1, 22 September 2002 (2002-09-22), pages 533-536, XP010607378 ISBN: 978-0-7803-7622-9 * the whole document * ----- | 1-15 | TECHNICAL FIELDS SEARCHED (IPC) |
| A | US 2008/247468 A1 (PEREZ DE NOTARIO CAROLINA BLANCH [ES]) 9 October 2008 (2008-10-09) * paragraphs [0009], [0 24] - [0029] * ----- | 1,13-15 | |

The present search report has been drawn up for all claims

| Place of search | Date of completion of the search | Examiner |
|---|---|---|
| Berlin | 29 July 2010 | Santos Luque, Rocio |

EPO FORM 1503 03.82 (P04C01)

**ANNEX TO THE EUROPEAN SEARCH REPORT
ON EUROPEAN PATENT APPLICATION NO.**

EP 10 16 2227

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2010

| Patent document cited in search report | Publication date | Patent family member(s) | Publication date |
|---|---|---|---|
| US 2003064744 A1 | 03-04-2003 | NONE | |
| US 2008247468 A1 | 09-10-2008 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Pollin et al.** MEERA: cross-layer methodology for energy efficient resource allocation in wireless networks. *IEEE Transactions on Wireless Communications,* 2007, vol. 6 (2), 617-628
- **Katsaggelos et al.** Energy-Efficient Wireless Video Coding and Delivery. *IEEE Wireless Communications,* 2005
- **Gan et al.** Cross-Layer optimization for multi-user video streaming over IEEE 802.11e HCCA wireless networks. *ICME,* 2008
- **Mohapatra et al.** DYNAMO: A Cross-Layer Framework for End-to-End QoS and Energy Optimization in Mobile Handheld Devices. *IEEE Journal on Selected areas in Communications,* May 2007, vol. 25

- **He et al.** Energy Minimization of Portable Video Communication Devices based on Power-Rate-Distortion Optimization. *IEEE Transactions on Circuits and Systems for Video Technology,* May 2008, vol. 18
- **Mangharam et al.** Optimal Fixed and Scalable Energy Management for Wireless Networks. *INFOCOM, USA,* 2005
- **Pollin et al.** MEERA: cross-layer methodology for energy efficient resource allocation in wireless networks. *IEEE Transactions on Wireless Communications,* 2007, vol. 6 (2), 617-628